# EUROPÄISCHE PATENTANMELDUNG

(11) **EP 2 347 886 A2**
(43) Veröffentlichungstag der Anmeldung: **27.07.2011**
(21) Anmeldenummer: 10194953.5
(22) Anmeldetag: 14.12.2010
(51) Int. Cl.: B29C 49/24, B29C 49/36, B29C 49/06

(54) **Etikettiervorrichtung zum Etikettieren von Kunststoffbehältern in der Blasform in einer Rundläufer-Blasmaschine**

(30) Priorität: 25.01.2010 DE 102010001191
(71) Anmelder: Krones AG, 93073 Neutraubling (DE)
(72) Erfinder: Hausladen, Wolfgang, 93099, Mötzing (DE); Popp, Christian, 93059, Regensburg (DE); Britten, Werner, 93309, Kehlheim (DE)
(74) Vertreter: Grünecker, Kinkeldey, Stockmair & Schwanhäusser Anwaltssozietät

(57) **Zusammenfassung**

Die Erfindung betrifft eine Etikettiervorrichtung zum Etikettieren von Kunststoffbehältern in der Blasform in einer Rundläufer-Blasmaschine. Die erfindungsgemäße Etikettiervorrichtung umfasst ein Blasrad, an dem mehrere Blasformen mit einem absenkbaren Blasformboden vorgesehen sind, sowie mindestens einen Etikettenspender zum Bereitstellen schlauchförmiger Etiketten. Dabei ist der Blasformboden so ausgebildet, dass über ihn ein Etikett vor dem Blasen in die Blasform eingebracht werden kann. Dies erleichtert die räumliche Trennung der Etikettenzuführung vom Einlaufstern des Blasrads und ermöglicht ein im Wesentlichen gleichzeitiges Einbringen des Etiketts und des Vorformlings.

## Beschreibung

Die Erfindung betrifft eine Etikettiervorrichtung zum Etikettieren von Kunststoffbehältern in der Blasform in einer Rundläufer-Blasmaschine.

Kunststoffbehälter, wie beispielsweise PET-Flaschen, können bekanntermaßen bereits während der Herstellung durch sogenanntes In-Mould-Labelling etikettiert werden, indem die Etiketten vor dem Blasen in die Blasform eingebracht werden. Hierzu wird das Etikett z. B. von Greifern seitlich in die geöffnete Blasform eingebracht, wie in der US 6.649.119 B2, der US 5.266.149 A und der WO 00 785 26 A1 für Rundläufermaschinen beschrieben.

Da die Vorformlinge jedoch ebenfalls in die Blasform eingelegt werden müssen, entsteht das Problem, dass die Einlegvorgänge entweder nacheinander auszuführen sind, was die Produktionsleistung verringert, oder die jeweiligen Übergabesysteme technisch aufwändige Konstruktionen erfordern, um eine Kollision der Greifer zu vermeiden. Außerdem besteht Bedarf für eine Vorrichtung, die sich auch nachträglich bei möglichst geringem Platzbedarf in bestehende Blasmaschinen integrieren lässt.

Aufgabe der Erfindung ist es, eine Vorrichtung zum Etikettieren von Kunststoffbehältern in der Blasform bereitzustellen, die eine hohe Prozesssicherheit und Produktionsleistung ohne diese Nachteile bietet.

Diese Aufgabe wird dadurch gelöst, dass die Etikettiervorrichtung ein Blasrad umfasst, an dem mehrere Blasformen mit einem absenkbaren Blasformboden vorgesehen sind, sowie mindestens einen Etikettenspender zum Bereitstellen schlauchförmiger Etiketten. Dabei ist der Blasformboden so ausgebildet, dass über ihn ein Etikett vor dem Blasen in die Blasform eingebracht werden kann.

Da das Etikett im unteren Abschnitt der Blasform mit Hilfe des Blasformbodens eingelegt wird, ist eine räumliche Trennung vom Einlaufstern des Blasrads mit relativ einfachen technischen Mitteln realisierbar und ein im Wesentlichen gleichzeitiges Einbringen des Etiketts und des Vorformlings möglich.

Vorzugsweise kann die Blasform zur seitlichen Entnahme des geblasenen Behälters aufgeklappt werden. Dies ermöglicht eine schnelle Entnahme des Behälters und ein schnelles Einlegen des Vorformlings.

Bei einer bevorzugten Ausführungsform ist mindestens ein Etikettenspender feststehend zwischen einem Einlaufstern und einem Auslaufstern des Blasrads angeordnet. Dies ermöglicht eine Platz sparende Bauweise.

Bei einer besonders günstigen Ausführungsform ist der Blasformboden am Blasrad an einem Ausfahrmechanismus gelagert, der den Blasformboden von der Drehachse des Blasrads weg in eine radiale Position unter dem Etikettenspender bewegen kann. Dadurch kann der Etikettenspender direkt neben dem Blasrad angeordnet werden. Ein zusätzlicher Übergabestern zum Einlegen der Etiketten in die Blasform ist dann nicht nötig.

Vorzugsweise umfasst der Blasformboden nach oben ausfahrbare Stifte zum Halten des Etiketts von innen. Dadurch kann vermieden werden, dass das Etikett auf dem Blasformboden verrutscht oder sich bei der Übergabe von diesem löst.

Vorzugsweise umfasst zumindest ein Stift eine Aufspannvorrichtung für das Etikett, die sich seitlich aufspreizt. Damit kann das Etikett in einer vorgesehenen Höhe über dem Blasformboden gehalten und in der aufgeklappten Blasform positioniert werden.

Bei einer weiteren bevorzugten Ausführungsform kann der Blasformboden vom Blasrad abgekoppelt werden, oder der Blasformboden umfasst einen Etikettenhalter, der vom Blasformboden abgekoppelt werden kann. Dadurch wird die Etikettenbestückung mit herkömmlichen Etikettieraggregaten vereinfacht.

Vorzugsweise umfasst die Etikettiervorrichtung eine Transfervorrichtung, die dem Etikettenspender leere abgekoppelte Blasformböden oder Etikettenhalter zuführt. Dadurch kann die Etikettenbestückung vom Blasrad räumlich entkoppelt werden.

Bei einer besonders günstigen Weiterbildung der Erfindung umfasst die Etikettiervorrichtung ferner eine rotierende Einlegevorrichtung und eine rotierende Entnahmevorrichtung, die die abkoppelbaren Blasformböden oder Etikettenhalter dem Blasrad zuführt bzw. entnimmt. Die rotierende Bauform ist besonders effektiv.

Vorzugsweise ist die Einlegevorrichtung unter einem Einlaufstern für Vorformlinge angeordnet und mit diesem gekoppelt und die Entnahmevorrichtung unter einem Auslaufstern für fertig geblasene Kunststoffbehälter angeordnet und mit diesem gekoppelt. Dies ermöglicht eine besonders Platz sparende Anordnung und maximiert den für das Blasen verfügbaren Prozesswinkel des Blasrads.

Bei einer weiteren bevorzugten Ausführungsform ist der Etikettenspender in den Blasformboden integriert. Dadurch kann das Etikett durch den Blasformboden selbst gespendet werden. Ein Einlegemechanismus mit Greifarmen ist dann nicht nötig.

Vorzugsweise umfasst der Blasformboden einen mittig schwimmenden Dorn, der mit einem Randabschnitt des Blasformbodens einen ringförmigen Spalt ausbildet, durch den das Etikett in die Blasform eingebracht werden kann. Dadurch kann das Etikett als Schlauch von der Rolle ohne vorheriges Ablängen in die Blasform eingebracht werden.

Vorzugsweise ist im Blasformboden ein Feldkraftlager vorgesehen, um den Dorn schwimmend zu lagern. Dies ermöglicht eine berührungslose und mechanisch stabile Lagerung, die dem Blasdruck standhält, ohne das Etikett zu beschädigen.

Vorzugsweise ist am Blasrad mindestens eine Speichereinrichtung für einen aus mehreren Etiketten gebildeten Etikettenschlauch vorgesehen. Dadurch kann der Etikettenvorrat mit dem Blasrad rotieren und dem Etikettenspender schnell und mit hoher Prozesssicherheit zugeführt werden.

Vorzugsweise ist an der Blasform eine Trenneinrichtung vorgesehen, die das eingelegte Etikett vom Etikettenschlauch beim Schließen der Blasform abtrennt. Dadurch kann das Etikett ohne zusätzlichen Arbeitsgang zuverlässig abgetrennt und ein optisch ansprechender Etikettenrand erzeugt werden.

Bevorzugte Ausführungsformen sind in der Zeichnung dargestellt. Es zeigen:
- Fig. 1a: eine schematische Seitenansicht einer Blasform und eines unter einem Etikettenspender abgesenkten Blasformbodens einer ersten Ausführungsform;
- Fig. 1b: den Blasformboden aus Fig. 1a in angehobener Stellung;
- Fig. 2: eine Schrägansicht des Blasformbodens aus Fig. 1a und 1b
- Fig. 3: eine Detailansicht eines Haltestifts des Blasformbodens mit einer aufklappbaren Aufspannvorrichtung für ein Etikett;
- Fig. 4: eine schematische Draufsicht auf eine zweite Ausführungsform der Erfindung;
- Fig. 5: einen schematischen Längsschnitt durch einen Blasformboden mit einem Etikettenhalter der zweiten Ausführungsform; und
- Fig. 6: einen schematischen Längsschnitt durch einen Blasformboden der dritten Ausführungsform.

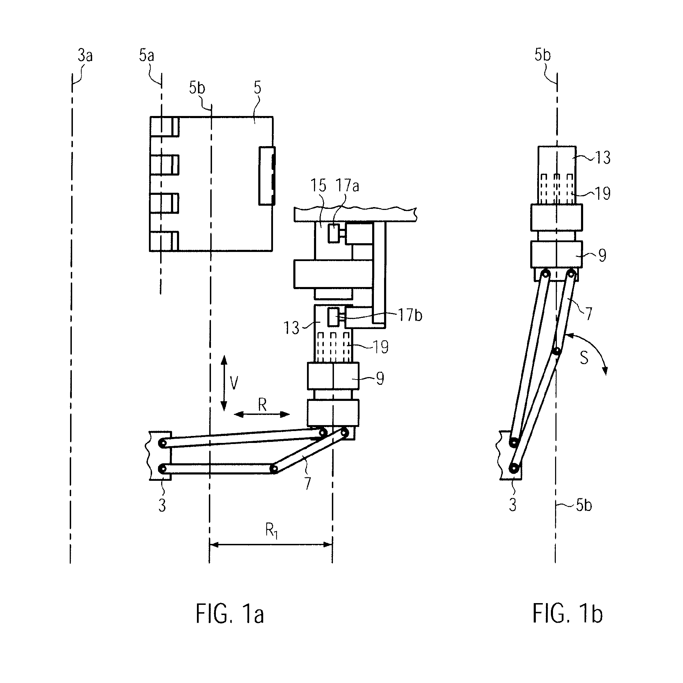

Wie die Figuren 1a und 1b erkennen lassen, umfasst eine erste Ausführungsform der erfindungsgemäßen Etikettiervorrichtung 1 ein um eine vertikale Achse 3a drehbares Blasrad 3 mit mehreren Blasformen 5 für Kunststoffbehälter (nicht gezeigt) wie z. B. herkömmliche PET-Flaschen, wobei in Fig. 1a der Einfachheit halber nur eine Blasform 5 schematisch angedeutet ist. Die Blasformen 5 können zum Einlegen eines Vorformlings mit einem Einlaufstern und zur seitlichen Entnahme der fertig geblasenen Flasche mit einem Auslaufstern um eine vertikale Achse 5a aufgeklappt werden.

An dem Blasrad 3 ist für jede Blasform 5 ein Ausfahrmechanismus 7 für den Blasformboden 9 in Form eines Parallelhebels vorgesehen, der eine Schwenkbewegung S von der Blasform 5 weg ausführen kann, wobei die Schwenkbewegung S eine seitliche, insbesondere radiale Komponente R und eine vertikale Komponente V umfasst. Vorzugsweise wird der Blasformboden 9 beim Aufklappen der Blasform 5 gleichzeitig abgesenkt und seitlich ausgefahren.

In Fig. 1a befindet sich der Blasformboden 9 in einer abgesenkten und seitlich ausgefahrenen Position unter einem feststehenden Etikettenspender 11 zum Bereitstellen schlauchförmiger Etiketten 13 von der Rolle. Der Etikettenspender 11 ist beispielsweise ein herkömmliches Sleeve-Aggregat, das einen Etikettenschlauch 15 mit Rollen 17a vorschiebt, das zusammengedrückte Schlauchlumen öffnet, ein Etikett 13 vom Schlauch 15 abschneidet und dieses mit Rollen 17b von oben auf den Blasformboden 9 schiebt, wobei das Etikett 13 auf dem Blasformboden 9 durch einen innen liegenden Haltekäfig 18 in Form von ausfahrbaren Stiften 19 stabilisiert wird.

In Fig. 1b befindet sich der Blasformboden 9 in einer angehobenen und seitlich eingefahrenen Position bei geschlossener Blasform 5, von der in Fig. 1b lediglich die Hauptachse 5b des Forminnenraums angedeutet ist. Die Stifte 19 sind in Fig. 1b teilweise in den Blasformboden 9 zurückgezogen. Wie Fig. 1a und 1b ferner zeigen, bewegt der Ausfahrmechanismus 7 den Blasformboden 9 um eine radiale Strecke R₁ zwischen der Blasform 5 und dem Etikettenspender 11 hin und her.

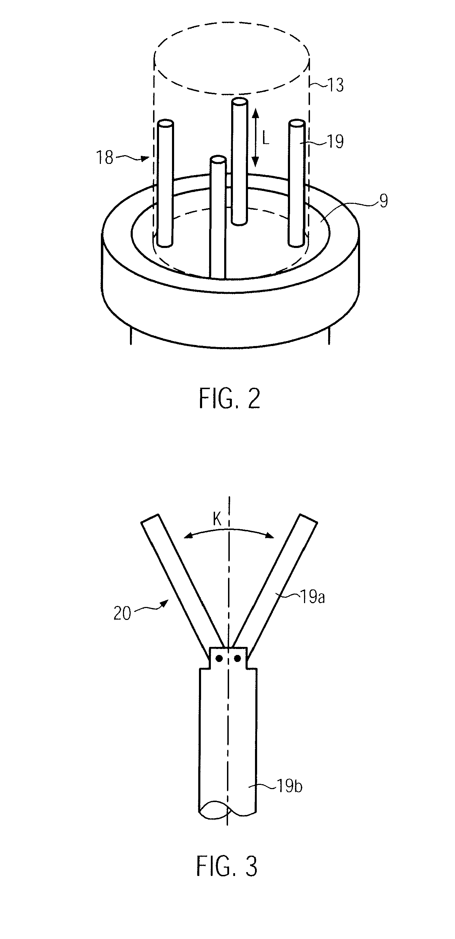

Wie in Fig. 2 angedeutet, wird der Haltekäfig 18 für das Etikett 13 beispielsweise von vier Stiften 19 gebildet. Es könnte jedoch auch eine davon abweichende Anzahl vorgesehen sein. Die Stifte 19 können vorzugsweise aus dem Blasformboden 9 ausgefahren bzw. in diesen zurückgezogen werden, wie durch den Pfeil L gekennzeichnet. In der vollständig eingefahrenen Stellung schließen die Stifte 19 mit dem umgebenden Blasformboden 9 vorzugsweise bündig ab, um die Formgebung der geblasenen Flasche möglichst wenig zu beeinträchtigen.

Die Stifte 19 sind während des Aufsetzens des Etiketts 13 auf den Blasformboden 9 bis zum Einfahren in die Blasform 5 in einer ausgefahren Stellung, um zu verhindern, dass das Etikett 13 beim Transfer zur Blasform 5 verrutscht oder herunterfällt. In der Blasform 5 können die Stifte 19 zunächst zumindest teilweise ausgefahren bleiben, bis der Vorformling so weit aufgeblasen ist, dass er das Etikett 13 gegen die Blasform 5 bzw. in die vorgesehene Position innerhalb der Blasform 5 drückt. Für den abschließenden Blasvorgang werden die Stifte 19 zurückgezogen.

Fig. 3 zeigt eine Variante des Stifts 19, bei dem das obere Ende des Stifts 19 geschlitzt ausgeführt ist und sich, wie durch den Pfeil K angedeutet, aufklappen lässt. In diesem Fall bilden die aufklappbaren Stiftelemente 19a einen Aufspannmechanismus 20 für das Etikett 13, um dieses in einer bestimmten Höhe über dem Blasformboden 9 zu halten und an die Blasform 5 bzw. den sich aufweitenden Vorformling zu übergeben. Zu diesem Zweck könnte der Aufspannmechanismus 20 auch durch einzelne seitlich bewegliche Stiftelemente 19a ausgebildet werden, die sich direkt vom Grundkörper 19b des Stifts 19 abspreizen. Ebenso kann der Aufspannmechanismus 20 an einzelnen oder allen Stiften 19 vorgesehen sein.

Der Ausfahrmechanismus 7 könnte alternativ eine lineare Hubeinheit und einen seitlich ausfahrbaren und/oder schwenkbaren Arm umfassen, um den Blasformboden 9 bis unter den Etikettenspender 11 auszufahren. Auch andere Hebelmechanismen sind denkbar.

Die Stellung des Blasformbodens 9 und des Haltekäfigs 18 kann beispielsweise mechanisch mit Steuerkurven oder durch Servomotoren eingestellt werden.

Der Etikettenspender 11 ist aus Sicht des Blasrads 3 vorzugsweise zwischen dem Einlaufstern für die Vorformlinge und dem Auslaufstern für die fertig geblasenen Flaschen angeordnet. Dies ermöglicht eine besonders Platz sparende Bauweise. Bei Bedarf können auch mehrere Etikettenspender 11 hintereinander angeordnet werden.

Mit der ersten Ausführungsform kann wie folgt gearbeitet werden:
Zur Entnahme einer fertig geblasenen Flasche aus der Blasform 5 mit dem Auslaufstern des Blasrads wird die Blasform seitlich aufgeklappt und der Blasformboden 9 vorzugsweise gleichzeitig ausgefahren. Nach Entnahme der Flasche werden die Stifte 19 ausgefahren und der Blasformboden 9, falls noch nicht in der in Fig. 1a gezeigten, ausgeschwenkten Etikettenübergabeposition befindlich, vollständig ausgefahren.

Das sich kontinuierlich weiter drehende Blasrad 3 fährt den Blasformboden 9 unter einen Etikettenspender 11, der ein Etikett 13 über die Stifte 19 schiebt. Das Etikett 13 wird von den Stiften 19 auf dem Blasformboden 9 in der gewünschten Höhe fixiert und der Blasformboden 9 wieder in Richtung der Blasform 5 zurückgeschwenkt. Währenddessen wird ein Vorformling mit dem Einlaufstern des Blasrads 3 zur Blasform 5 geführt und diese wieder zugeklappt.

Anschließend kann die Flasche in bekannter Weise geblasen werden, wobei die Stifte 19 je nach Bedarf bis zur Fixierung des Etiketts 13 in der Blasform 5 bzw. an der zu blasenden Flasche zumindest teilweise ausgefahren bleiben können. Hierbei soll sich das Etikett 13 während des Blasvorgangs vom Blasformboden 9 lösen können, damit es während des Blasens durch Reckung an die zu etikettierende Stelle der Flasche wandert. Vorzugsweise wird das Etikett 13 daher im Durchmesser etwas kleiner als die fertig geblasene Flasche ausgeführt, so dass das Etikett 13 auch an der Stelle mit dem kleinsten Flaschendurchmesser eng anliegt bzw. im Durchmesser geringfügig gedehnt wird. Das Etikett 13 hält somit überwiegend durch Verstreckung an der fertig geblasenen Flasche.

Im folgenden sind weitere Ausführungsformen der Erfindung beschrieben, wobei auf eine Wiederholung obenstehend beschriebener, gemeinsamer Merkmale verzichtet wird. Ebenso können einzelne Merkmale der Ausführungsformen miteinander kombiniert werden.

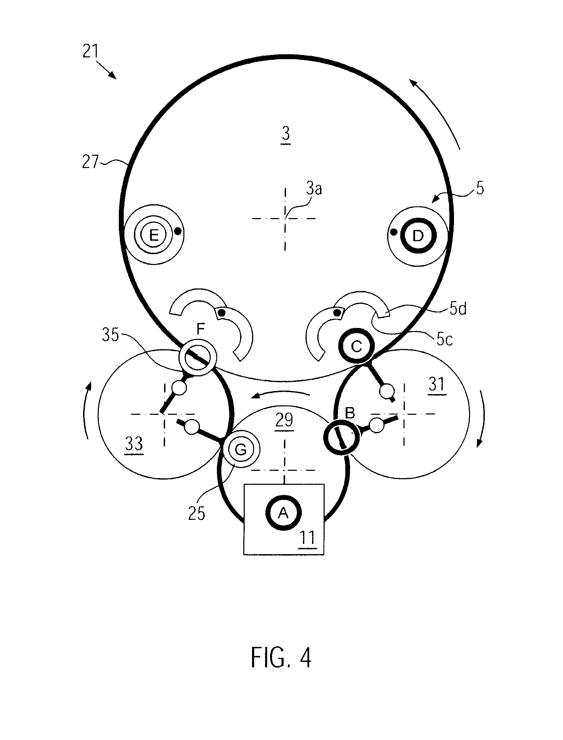

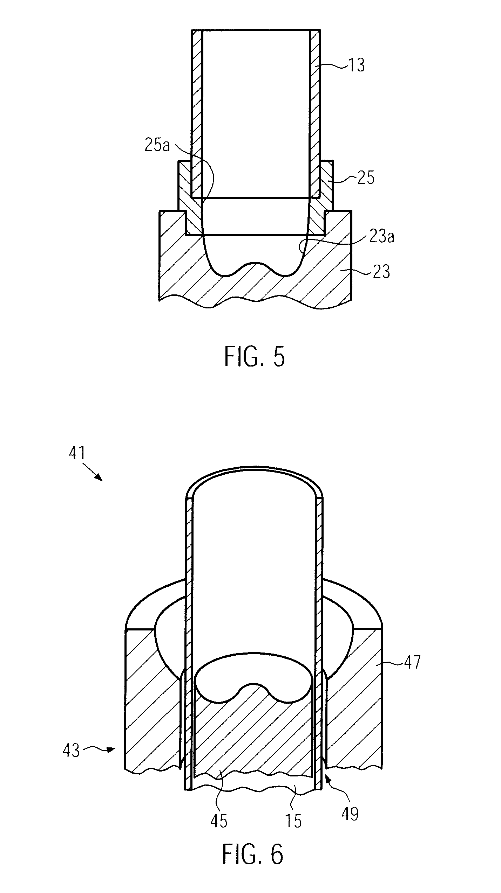

Fig. 4 zeigt eine schematische Aufsicht auf eine Etikettiervorrichtung 21 einer zweiten Ausführungsform und Fig. 5 einen schematischen Schnitt durch den Blasformboden 23 der zweiten Ausführungsform mit einen vom Blasrad 3 bzw. dem Blasformboden 23 abkoppelbaren Etikettenhalter 25. Dieser ist ein Teil der Blasform 5. Das heißt, die Innenwände 5c, 23a und 25a der seitlichen Blasformhälften 5b, des Blasformbodens 23 und des Etikettenhalters 25 bilden gemeinsam den Innenraum der Blasform 5. Die Innenwände 5c, 23a und 25a stoßen vorzugsweise bündig aneinander.

Fig. 4 verdeutlicht ferner, dass der Etikettenhalter 25 in einem (fett gedruckten) Kreislauf 27 durch die Etikettiervorrichtung 21 geführt wird, wobei der Etikettenhalter 25 nacheinander eine rotierende Transfervorrichtung 29, eine rotierende Einlegevorrichtung 31 zum Einlegen der Etikettenhalter 25 in die Blasformen 5, das Blasrad 3 und eine rotierende Entnahmevorrichtung 33 zum Entnehmen der Etikettenhalter 25 aus den Blasformen 5 durchläuft. Gezeigt ist dies anhand der Positionen A bis G des Etikettenhalters 25, wobei bestückte Etikettenhalter 25 als schwarzer Ring und unbestückte Etikettenhalter 25 als weißer Ring dargestellt sind.

An der Einlegevorrichtung 31 und der Entnahmevorrichtung 33 sind in jeweils umfänglich gleichmäßiger Teilung mitrotierende Greifer 35 zum Halten und Übergeben der Etikettenhalter 25 vorgesehen. Die Greifer 35 können beispielsweise schwenkbar und/oder ausfahrbar sein. Die Einlegevorrichtung 31 ist vorzugsweise koaxial unter dem Einlaufstern (nicht gezeigt) für die Vorformlinge, die Entnahmevorrichtung 33 koaxial unter dem Auslaufstern (nicht gezeigt) für die fertig geblasenen Flaschen angeordnet und mit dem jeweiligen Stern gekoppelt. Der Übersichtlichkeit halber sind in Fig. 4 nur die an den Positionen B bis G vorgesehen Greifer 35 bzw. Blasformen 5 gezeigt.

Die Funktionsweise der zweiten Ausführungsform ist demnach wie folgt:
Die Transfervorrichtung 29 führt dem Etikettenspender 11 kontinuierlich unbestückte Etikettenhalter 25 zu, die an der Position A jeweils mit einem schlauchförmigen Etikett 13 von oben bestückt werden.

An der Position B wird der bestückte Etikettenhalter 25 von der Einlegevorrichtung 31 übernommen und an der Position C an eine aufgeklappte Blasform 5 übergeben. Dabei rastet der Etikettenhalter 25 formschlüssig in den mit einer (nicht dargestellten) Hubeinheit abgesenkten Blasformboden 23 der Blasform 5 ein.

Anschließend wird der Blasformboden 23 mit dem Etikettenhalter 25 wieder nach oben gefahren und die Blasform 5 geschlossen, so dass das Etikett 13 zu Beginn des Blasvorgangs von dem Etikettenhalter 25 in der vorgesehen Position gehalten wird, wie an der Position D angedeutet.

Der Vorformling wird vom Einlaufstern in bekannter Weise in die Blasform 5 eingelegt, wobei der Einlaufstern und die Einlegevorrichtung 31 so übereinander angeordnet sind, dass die zugehörigen Greifer, die z. B. als Teilungsverzugsarme ausgebildet sein können, nicht kollidieren. Dies gilt ebenso für den Auslaufstern und die Entnahmevorrichtung 33.

Die Position E kennzeichnet das Ende des Blasvorgangs, wenn das Etikett 13 bereits an der fertig geblasenen Flasche anliegt und nicht mehr vom Etikettenhalter 25 gehalten werden muss bzw. sich von diesem abgelöst hat. Die Positionierung und Befestigung des Etiketts 13 auf der Flasche erfolgt dabei im Wesentlichen in der für die erste Ausführungsform beschriebenen Weise.

An der Position F ist der Blasformboden 23 bereits wieder abgesenkt und die Blasform 5 aufgeklappt, so dass zum Einen die fertig geblasene Flasche seitlich vom Auslaufstern entnommen werden kann und der unbestückte Etikettenhalter 25 von der Entnahmevorrichtung 33 übernommen wird.

An der Position G übergibt die Entnahmevorrichtung 33 den unbestückten Etikettenhalter wieder an die Transfervorrichtung 29 zur erneuten Bestückung mit einem Etikett 13.

An dem Etikettenhalter 25 kann ein Haltekäfig 18 vorgesehen sein. Ebenso wäre es möglich, den gesamten Blasformboden 23 von der Blasform 5 bzw. dem Blasrad 3 abzukoppeln, mit einem Etikett 13 zu bestücken und wie beschrieben im Kreislauf 27 zu fahren. In diesem Fall würde der Greifer 35 den Blasformboden 23 in geeigneter Weise von einer (nicht gezeigten) Hubeinheit am Blasrad 3 abkoppeln und nach der Bestückung wieder in dieser einrasten.

Wie Fig. 4 zeigt, ist die Transfervorrichtung 29, die gegebenenfalls auch als Transportband ausgeführt werden könnte, zwischen der Einlegevorrichtung 31 und der Entnahmevorrichtung 33 bzw. zwischen dem Einlaufstern und dem Auslaufstern des Blasrads 3 angeordnet. Entsprechend können ein oder mehrere Etikettenspender 11 am Blasrad 3 angeordnet und gegebenenfalls in bestehende Maschinen integriert werden.

Die zweite Ausführungsform bietet den Vorteil, dass der Etikettenhalter 25, oder gegebenenfalls der Blasformboden 23, mit einem Etikett 13 bestückt werden kann, während dieser vom Blasrad 3 abgekoppelt ist. Dies vereinfacht das Bestücken mit schlauchförmigen Etiketten 13. Hierbei genügt ein einzelner Etikettenspender 11. Außerdem kann man auf herkömmliche Etikettenspender, wie Sleeve-Aggregate, zurückgreifen.

Wie Fig. 6 zeigt, umfasst eine Etikettiervorrichtung 41 gemäß einer dritten Ausführungsform der Erfindung einen mindestens zweiteiligen Blasformboden 43 mit einem mittigen Dorn 45 und einem äußeren, ringförmigen Randabschnitt 47. Zwischen dem Dorn 45 und dem Randabschnitt 47 ist in ringförmiger Spalt 49 ausgebildet, durch den das Etikett 13 bzw. der Etikettenschlauch 15 von unten in die Blasform 5 eingebracht werden kann.

Der Dorn 45 ist schwimmend im Randabschnitt 47 gelagert und wird beispielsweise durch ein Feldkraftlager in seiner Position gehalten, beispielsweise durch (nicht gezeigte) Permanent- und/oder Elektromagnete im Dorn 45 und im Randabschnitt 47, so dass zum Einen ein Einführen des Etiketts 13 möglich ist, und dass zum Anderen die Position des Dorns 45 auch beim Einwirken des Blasdrucks gehalten wird, ohne das Etikett 13 zu beschädigen. Alternativ oder unterstützend ist auch ein Rollenmechanismus als Lager denkbar.

Bei der dritten Ausführungsform wird der Etikettenschlauch 15 auf dem Blasrad 3 auf einer Rolle oder in einem geeigneten Magazin gespeichert und direkt aus dem Blasformboden 43 gespendet. Somit ist an jeder Blasform 5 eine eigene Zufuhreinheit bzw. ein eigener Etikettenspender 11 vorgesehen. Dieser kann im Wesentlichen wie in Fig. 1a gezeigt aufgebaut sein, steht jedoch auf dem Kopf, so dass die Etiketten 13 von unten nach oben gespendet werden. Der Etikettenschlauch 15 wird jeweils zwischen der Flaschenentnahme und der Übergabe des Vorformlings, während die Blasform 5 aufgeklappt ist, nachgeschoben. Bei der Flaschenentnahme wird der Etikettenspender 11 mit dem Blasformboden 43 abgesenkt.

Die Etiketten 13 sind vom Etikettenschlauch 15 vorzugsweise erst dann abzutrennen, wenn das Etikett 13 vollständig in die Blasform 5 eingebracht ist. Daher kann die Blasform 5 so ausgebildet sein, dass sie das Etikett 13 beim Schließen der Blasform 5 durch eine geeignete Trennvorrichtung (nicht gezeigt), wie beispielsweise in der Blasform 5 bzw. am Blasformboden 43 ausgebildete Schneiden, vom Etikettenschlauch 15 abtrennt. Alternativ wäre es auch denkbar, den Etikettenschlauch 15 umfänglich zu perforieren, so dass das Etikett 13 durch Verstreckung in der Blasform 5 oder bei der Entnahme der fertig geblasenen Flasche vom Schlauch 15 abgetrennt wird.

## Patentansprüche

1. Etikettiervorrichtung (1, 21, 41) zum Etikettieren von Kunststoffbehältern in der Blasform in einer Rundläufer-Blasmaschine, mit:
- einem Blasrad (3), an dem mehrere Blasformen (5) mit einem absenkbaren Blasformboden (9, 23, 43) vorgesehen sind; und
- mindestens einem Etikettenspender (11) zum Bereitstellen schlauchförmiger Etiketten (13),
wobei der Blasformboden (9, 23, 43) so ausgebildet ist, dass über ihn ein Etikett (13) vor dem Blasen in die Blasform (5) eingebracht werden kann.

2. Etikettiervorrichtung nach Anspruch 1, **dadurch gekennzeichnet, dass** die Blasform (5) zur seitlichen Entnahme des geblasenen Behälters aufgeklappt werden kann.

3. Etikettiervorrichtung nach Anspruch 1 oder 2, **dadurch gekennzeichnet, dass** mindestens ein Etikettenspender (11) feststehend zwischen einem Einlaufstern und einem Auslaufstern des Blasrads (3) angeordnet ist.

4. Etikettiervorrichtung nach mindestens einem der vorigen Ansprüche, **dadurch gekennzeichnet, dass** der Blasformboden (9) am Blasrad (3) an einem Ausfahrmechanismus (7) gelagert ist, der den Blasformboden (9) von der Drehachse (3a) des Blasrads (3) weg in eine radiale Position unter dem Etikettenspender (11) bewegen kann.

5. Etikettiervorrichtung nach mindestens einem der vorigen Ansprüche, **dadurch gekennzeichnet, dass** der Blasformboden (9, 23) nach oben ausfahrbare Stifte (19) zum Halten des Etiketts (13) von innen umfasst.

6. Etikettiervorrichtung nach Anspruch 5, **dadurch gekennzeichnet, dass** zumindest ein Stift (19) eine Aufspannvorrichtung (20) für das Etikett (13) umfasst, die sich seitlich aufspreizt.

7. Etikettiervorrichtung nach einem der Ansprüche 1 bis 3, **dadurch gekennzeichnet, dass** der Blasformboden (23) vom Blasrad (3) abgekoppelt werden kann oder dass der Blasformboden (23) einen Etikettenhalter (25) umfasst, der vom Blasformboden (23) abgekoppelt werden kann.

8. Etikettiervorrichtung nach Anspruch 7, ferner **gekennzeichnet durch** eine Transfervorrichtung (29), die dem Etikettenspender (11) leere abgekoppelte Blasformböden (23) oder Etikettenhalter (25) zuführt.

9. Etikettiervorrichtung nach Anspruch 8, ferner **gekennzeichnet durch** eine rotierende Einlegevorrichtung (31)und eine rotierende Entnahmevorrichtung (33), die die abkoppelbaren Blasformböden (23) oder Etikettenhalter (25) dem Blasrad (3) zuführt bzw. entnimmt.

10. Etikettiervorrichtung nach Anspruch 9, **dadurch gekennzeichnet, dass** die Einlegevorrichtung (31) unter einem Einlaufstern für Vorformlinge angeordnet und mit diesem gekoppelt ist und die Entnahmevorrichtung (33) unter einem Auslaufstern für fertig geblasene Kunststoffbehälter angeordnet und mit diesem gekoppelt ist.

11. Etikettiervorrichtung nach Anspruch 1 oder 2, **dadurch gekennzeichnet, dass** der Etikettenspender (11) in den Blasformboden (43) integriert ist.

12. Etikettiervorrichtung nach Anspruch 1, 2 oder 11, **dadurch gekennzeichnet, dass** im Blasformboden (43) ein mittig schwimmender Dorn (45) ausgebildet ist, der mit einem Randabschnitt (47) des Blasformbodens einen ringförmigen Spalt (49) ausbildet, durch den das Etikett (13) in die Blasform eingebracht werden kann.

13. Etikettiervorrichtung nach Anspruch 12, **dadurch gekennzeichnet, dass** im Blasformboden (43) ein Feldkraftlager vorgesehen ist, um den Dorn (45) schwimmend zu lagern.

14. Etikettiervorrichtung nach mindestens einem der Ansprüche 1, 2 und 11 bis 13, **dadurch gekennzeichnet, dass** am Blasrad (3) mindestens eine Speichereinrichtung für einen aus mehreren Etiketten (13) gebildeten Etikettenschlauch (15) vorgesehen ist.

15. Etikettiervorrichtung nach Anspruch 14, **dadurch gekennzeichnet, dass** an der Blasform (5) eine Trenneinrichtung vorgesehen ist, die das eingelegte Etikett (13) vom Etikettenschlauch (15) beim Schließen der Blasform (5) abtrennt.
